# FASCICULE DE BREVET EUROPEEN

(11) **EP 4 166 391 B1**
(45) Date de publication et mention de la délivrance du brevet: **26.06.2024**
(21) Numéro de dépôt: 22201642.0
(22) Date de dépôt: 14.10.2022
(51) Int. Cl.: B60Q 1/06, B60Q 1/076, B60Q 1/068

(54) **FIXATION RENFORCÉE D'UN MODULE D ÉCLAIRAGE À UN BOÎTIER**
VERSTÄRKTE BEFESTIGUNG EINES BELEUCHTUNGSMODULS AN EINEM GEHÄUSE
REINFORCED ATTACHMENT OF A LIGHTING MODULE TO A HOUSING

(30) Priorité: 15.10.2021 FR 2110963
(43) Date de publication de la demande: 19.04.2023
(73) Titulaire: Valeo Vision, 93012 Bobigny Cedex (FR)
(72) Inventeur: BAKACHA, Malik, 49000 Angers (FR); BERTHO, Dominique, 49000 Angers (FR); HASBAOUI, Mounir, 49000 Angers (FR); LUCAS, Philippe, 49000 Angers (FR); SOENEN, Xavier, 49000 Angers (FR); WARNER, Gavin, 49000 Angers (FR)
(74) Mandataire: Valeo Visibility

(56) Documents cités:
- EP-A1- 2 933 142
- DE-A1-102012 100 459
- DE-A1-102013 103 793
- JP-A- H0 536 301
- US-A- 5 016 155
- US-A1- 2008 043 482
- US-A1- 2010 296 307

## Description

La présente invention appartient au domaine de la fixation et de l'ajustement d'un module d'éclairage dans un boîtier, tel qu'un boîtier de phare de véhicule automobile.

L'invention concerne un dispositif d'éclairage comprenant un ou plusieurs modules d'éclairage montés mobiles par rapport à un boîtier du dispositif d'éclairage.

Généralement, un module d'éclairage est monté de manière mobile dans un boîtier de phare afin d'être en mesure de supporter des contraintes mécaniques vibratoires. En outre, un réglage précis de l'orientation du module d'éclairage par rapport au boîtier est nécessaire afin que les fonctions d'éclairage du dispositif d'éclairage soient optimales et puissent répondre à des contraintes règlementaires.

Les modules d'éclairage sont généralement montés mobiles dans le boîtier par des points de fixation. Chaque point de fixation peut comprendre des moyens de fixation et/ou des moyens de réglages aptes à régler l'orientation du module d'éclairage par rapport au boîtier.

Les moyens de fixation subissent des contraintes vibratoires importantes notamment lorsque le véhicule roule sur des revêtements de route partiellement dégradés.

Les véhicules lourds, tels que les camions, imposent un cahier des charges encore plus exigeant en raison notamment de contraintes vibratoires plus importantes que des véhicules plus légers. Les points de fixation prévus de l'art antérieur sont alors mal adaptés pour de tels véhicules et peuvent conduire à une cassure d'un ou de plusieurs points de fixation.

Il existe un besoin d'empêcher, ou de limiter, de telles détériorations de points de fixation d'un module d'éclairage dans un boîtier de dispositif d'éclairage, dans le cas notamment de véhicules lourds ou plus généralement de véhicules imposant des contraintes vibratoires importantes.

Un dispositif d'éclairage comportant un module d'éclairage monté mobile dans un boîtier par trois points de fixation définissant deux axes de rotation plus un point de fixation additionnel est connu de US 5 016 155 A.

La présente invention améliore la situation.

Un aspect de l'invention concerne un dispositif d'éclairage comprenant les caractéristiques de la revendication 1.

Un point de fixation additionnel selon l'invention permet de diminuer les contraintes vibratoires sur les autres points de fixation et permet ainsi de renforcer la fixation du module d'éclairage au boîtier, notamment dans le cas où le dispositif d'éclairage est monté dans un véhicule lourd. La position intermédiaire entre les points de fixation permet notamment de faciliter la reprise des efforts verticaux dus au poids du module d'éclairage.

Selon un mode de réalisation, le point de fixation additionnel peut être apte à supporter une charge verticale du module d'éclairage.

Les contraintes vibratoires verticales étant les plus importantes, le point de fixation additionnel permet ainsi de réduire le risque de rupture des autres points de fixation du dispositif d'éclairage.

Selon l'invention, le point de fixation additionnel est agencé sur l'axe de rotation horizontal.

Un tel mode de réalisation améliore la reprise d'effort vertical du point de fixation additionnel.

Selon un mode de réalisation, le point de fixation additionnel peut être dans un voisinage du centre de gravité du module d'éclairage.

Les contraintes vibratoires verticales étant principalement dues au poids du module d'éclairage, un tel positionnement du point de fixation additionnel permet d'optimiser la reprise d'effort vertical en limitant la résonance vibratoire du module d'éclairage selon la direction verticale.

Selon un mode de réalisation, les premier, deuxième et troisième points de fixation sont disposés de manière à encadrer un voisinage du centre de gravité du module d'éclairage.

Dans un exemple de réalisation, lorsque le dispositif d'éclairage est monté dans un véhicule automobile, le module d'éclairage peut être orienté de manière à émettre des rayons lumineux sensiblement parallèles à un axe horizontal et longitudinal X et le module d'éclairage peut s'étendre en largeur selon un axe horizontal et transversal Y. Dans cet exemple, les trois points de fixation sont situés à des positions extrêmes dans le plan Y-Z du module d'éclairage, proches des limites du module d'éclairage dans ce même plan.

Selon un mode de réalisation, le premier point de fixation est mobile en translation selon l'axe Z et est disposé proche de la limite haute du module d'éclairage dans le plan Y-Z. Le deuxième point de fixation est un point de liaison fixe à rotule. Le troisième point de fixation est mobile en translation selon l'axe Y. Les premier et deuxième points de fixation sont alignés selon l'axe Z. Les deuxième et troisième points de fixation sont alignés selon l'axe Y et ils sont disposés proche de la limite basse du module d'éclairage.

Selon un mode de réalisation, lorsque le dispositif d'éclairage est monté dans un véhicule automobile, le module d'éclairage peut être orienté de manière à émettre des rayons lumineux sensiblement parallèles à un axe horizontal et longitudinal X et le module d'éclairage peut s'étendre en largeur selon un axe horizontal et transversal Y. Le module d'éclairage peut comprendre une jambe de fixation additionnelle, sensiblement selon l'axe X, dans un sens opposé au sens de propagation des rayons lumineux, et le dispositif d'éclairage peut comprendre une tige solidaire du boîtier et apte à réaliser un contact sphère-plan avec une surface intérieure de la jambe de fixation, le contact sphère-plan étant apte à supporter une charge verticale du module d'éclairage, et formant le point de fixation additionnel.

Un tel mode de réalisation permet de réaliser un point de fixation additionnel de manière simple et peu coûteuse, tout en facilitant le montage du module d'éclairage dans le boîtier.

Selon un mode de réalisation, la tige comprend une partie tubulaire s'étendant selon l'axe longitudinal X et à son extrémité dirigée vers la jambe de fixation la tige comprend un rétrécissement de sa section transverse de sorte à former une gorge, suivi d'une sphère en position extrême. La sphère peut présenter une dimension légèrement inférieure à celle de l'intérieur de la jambe de fixation pour faciliter le montage. La gorge présentée sur la tige permet d'avoir un grand débattement lors du réglage de l'orientation du module lumineux par rapport au boîtier tout en limiter le jeu qui pourrait avoir entre la tige et l'intérieur de la jambe de fixation.

En complément, la jambe de fixation additionnelle peut être en matériau thermodurcissable ou thermoplastique.

Un tel matériau thermodurcissable ou thermoplastique peut être réalisé à faibles coûts. Toutefois, elle ne peut être usiné. Le mode de réalisation avec une tige réalisant un contact sphère-plan à l'intérieur de la jambe de fixation additionnelle permet alors d'améliorer le support du module d'éclairage selon l'axe Z sans requérir de traitement mécanique de la jambe de fixation additionnelle.

Encore en complément, le dispositif d'éclairage comprend un support du module d'éclairage, le support peut être principalement en un matériau thermodurcissable ou thermoplastique, et la jambe de fixation additionnelle peut être obtenue par injection du support.

Un tel mode de réalisation permet de réaliser le point de fixation additionnel à moindre coût, sans nécessiter l'ajout de pièces et de moyens de fixation de ces pièces au module d'éclairage.

Selon un mode de réalisation alternatif, lorsque le dispositif d'éclairage est monté dans un véhicule automobile, le module d'éclairage peut être orienté de manière à émettre des rayons lumineux sensiblement parallèles à un axe horizontal et longitudinal X, le module lumineux peut s'étendre en largeur selon un axe horizontal et transversal Y et le module d'éclairage peut comprendre une jambe de fixation, sensiblement selon l'axe X, dans un sens opposé au sens de propagation des rayons lumineux, et la jambe de fixation peut comprendre un chariot monté dans des rainures de guidage du boîtier par une liaison glissière selon l'axe horizontal et longitudinal X, la liaison glissière étant apte à supporter une charge verticale du module d'éclairage, le contact entre le chariot et la rainure de guidage formant le point de fixation additionnel.

Les éléments de guidage permettent au chariot, et donc au module d'éclairage, de coulisser selon l'axe longitudinal X, tout en soutenant le module d'éclairage selon la direction verticale Z. Le point de fixation additionnel constitue ainsi une solution anti-vibration dans la mesure où il assure un soutien du module d'éclairage selon la direction X correspondant à la direction de translation du chariot, ainsi qu'il limite des mouvements oscillatoires du module d'éclairage dans un plan perpendiculaire à la direction de translation du chariot.

En complément, le chariot et les rainures de guidage peuvent être conformés et agencés de manière à ce que la liaison glissière soit libre en translation selon l'axe X et selon l'axe transversal Y, et libre en rotation autour d'un axe vertical Z.

Le point de fixation additionnel est ainsi dédié à la reprise de charge selon l'axe vertical, ce qui réduit le risque de rupture du point de fixation additionnel.

D'autres caractéristiques et avantages de l'invention apparaîtront à l'examen de la description détaillée ci-après, et des dessins annexés sur lesquels :
[Fig 1] une vue en coupe selon un plan Y-Z vertical et normal à une direction X de propagation de rayons lumineux d'un module d'éclairage d'un dispositif d'éclairage selon un mode de réalisation de l'invention;
[Fig 2] est une vue tridimensionnelle d'un module d'éclairage d'un dispositif d'éclairage selon un premier mode de réalisation de l'invention;
[Fig 3] comprend une figure 3A et une figure 3B illustrant un chariot d'un point de fixation additionnel d'un module d'éclairage à un boîtier, selon le premier mode de réalisation de l'invention, la figure 3B étant une vue de coupe selon le plan III-III représenté sur la figure 3A ;
[Fig 4] est une vue tridimensionnelle d'un module d'éclairage d'un dispositif d'éclairage selon un deuxième mode de réalisation de l'invention ;
[Fig 5] présente une tige et une jambe de fixation réalisation un point de fixation additionnel d'un module d'éclairage à un boîtier, selon un deuxième mode de réalisation de l'invention ;
[Fig 6] présente une tige d'un point de fixation additionnel selon un deuxième mode de réalisation de l'invention ;
[Fig 7] est une vue tridimensionnelle de face d'un module d'éclairage d'un dispositif d'éclairage selon le deuxième mode de réalisation de l'invention.

Dans la description qui va suivre, de nombreuses caractéristiques géométriques du dispositif d'éclairage vont être définies par référence à des notions géométriques telles que des points d'appui et des axes de pivotement d'un module d'éclairage, un plan défini par ces points et/ou ces axes, la direction principale de projection du module d'éclairage, etc., et ce pour des raisons de clarté d'exposé. Dans la réalité, la position de ces différentes notions ou de ces différents repères géométriques peuvent dévier quelque peu des correspondances qui vont être décrites, et ce en raison d'une part de tolérance de fabrication, et d'autre part de la non nécessité d'une parfaite correspondance. L'exposé qui va suivre ne peut donc être interprété comme limitant de manière stricte l'invention à des correspondances géométriques parfaites dans la mesure où une déviance de ces correspondances garantit toujours le principe et les avantages de l'invention.

Dans le présent document, les termes « horizontal », « vertical » ou « transversal », « inférieur », « supérieur », « haut », « bas », « côté » sont définis par rapport à l'orientation du dispositif d'éclairage telle qu'elle est montée dans le véhicule. En particulier, dans cette demande, le terme « vertical » désigne une orientation perpendiculaire à l'horizon tandis que le terme « horizontal » désigne une orientation parallèle à l'horizon.

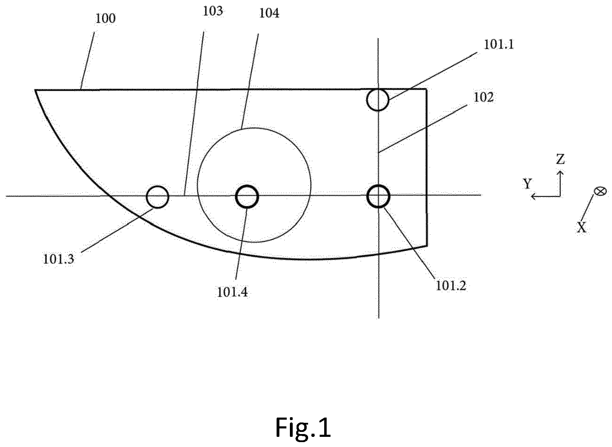

La figure 1 illustre une coupe dans un plan vertical Y-Z d'un module lumineux 100 d'un dispositif d'éclairage selon un mode de réalisation de l'invention.

Le plan vertical Y-Z est sensiblement normal à une direction principale de propagation de rayons lumineux issus du dispositif d'éclairage, lorsqu'il est monté dans un véhicule automobile.

L'axe X correspondant sensiblement à la direction principale de propagation des rayons lumineux définit un axe longitudinal avant-arrière, les rayons lumineux étant projetés vers l'avant. Dans ce référentiel, la vue de la figure 1 est placée en arrière du module d'éclairage 100.

L'axe Z correspond à un axe vertical lorsque le dispositif d'éclairage est placé dans un véhicule automobile.

L'axe Y correspond à un axe transversal, normal aux deux autres axes et le module d'éclairage 100 s'étend en largeur selon l'axe Y.

Selon l'invention, un dispositif d'éclairage consiste essentiellement en un boîtier (non représenté sur la figure 1) renfermant ou supportant le module d'éclairage de la figure 1.

Dans ce qui suit, le boîtier n'est pas représenté dans son intégralité, seuls des éléments de fixation du boîtier étant représentés. Toutefois, aucune restriction n'est attachée à la forme du boîtier du dispositif d'éclairage selon l'invention.

Dans l'exemple illustré, le module d'éclairage 100 comprend un réflecteur et plusieurs sources lumineuses non représentées sur la figure 1. Ici, chacune des sources lumineuses est portée par un support servant de radiateur pour dissiper la chaleur dégagée par ladite source. Le réflecteur est divisé en plusieurs portions, chacune des portions étant dédiée à un ensemble de source lumineuse et de support.

Conformément à l'art antérieur, le dispositif lumineux comprend trois points de fixation du module d'éclairage 100 au boîtier. Les trois points de fixation sont référencés respectivement 101.1, 101.2 et 101.3.

Les deux points de fixation 101.1 et 101.2 définissent un axe de rotation vertical 102, selon l'axe Z, du module d'éclairage 100 par rapport au boîtier, et les deux points de fixation 101.2 et 101.3 définissent un axe de rotation transversal 103 selon l'axe Y.

L'axe de rotation vertical 102 permet de régler l'angle d'azimut du module d'éclairage 100 par rapport au boîtier.

Aucune restriction n'est attachée à la répartition des trois points de fixation 101.1, 101.2 et 101.3 qui forment généralement un triangle définissant deux axes de rotation sensiblement perpendiculaires dans un plan vertical transverse Y-Z. De manière préférentielle, les trois points de fixation 101.1, 101.2 et 101.3 sont situés à des positions extrêmes dans le plan Y-Z du module d'éclairage, proches des limites du module d'éclairage 100 dans ce même plan. Les points de fixation 101.1, 101.2 et 101.3 encadrent un voisinage 104 du centre de gravité du module d'éclairage 100.

L'axe longitudinal X de projection du module d'éclairage 100 est généralement perpendiculaire au plan formé par les trois points de fixation 101.1, 101.2 et 101.3. Cependant, une déviation d'une certaine tolérance notamment de l'ordre de 30°, préférentiellement 20° est acceptable. Une telle déviation permet en effet d'assurer un réglage du faisceau horizontalement (azimut) et verticalement.

On entend par centre de gravité du module d'éclairage 100, le centre de gravité obtenu lorsque le module d'éclairage est équipé de l'ensemble des éléments qui le composent, dont les éléments listés ci-dessus, à savoir un réflecteur, plusieurs sources lumineuses et leur support.

Le module d'éclairage peut comprendre trois jambes de fixation, qui seront présentées en référence aux figures suivantes, comprenant les trois points de fixation 101.1, 101.2 et 101.3.

Les trois jambes de fixation s'étendent principalement selon l'axe X dans un sens arrière, opposé au sens de propagation des rayons lumineux. Les jambes de fixation sont ainsi placées sur une surface arrière du module d'éclairage 100.

Une première jambe peut faire partie d'un premier point de fixation 101.1 mobile à rotule avec le boîtier. Ce point de fixation est mobile en translation selon l'axe Z au moyen d'un actuateur linéaire électrique par exemple.

Une deuxième jambe peut faire partie d'un deuxième point de fixation 101.2 fixe à rotule avec le boîtier.

Une troisième jambe peut faire partie d'un troisième point de fixation 101.3 mobile à rotule avec le boîtier. Le troisième point de fixation 101.3 est mobile en translation selon l'axe Y au moyen d'un actuateur linéaire électrique ou d'une vis de réglage manuel.

Selon l'invention, le dispositif d'éclairage comprend un point de fixation additionnel, ou quatrième point de fixation, du module d'éclairage 100 au boîtier. Un tel quatrième point de fixation 101.4 peut notamment renforcer la robustesse du montage du module d'éclairage 100 dans le boîtier, notamment dans un contexte d'importantes contraintes vibratoires. Afin de permettre un tel renforcement, le point de fixation additionnel 103.4 est avantageusement situé sur l'axe de rotation transverse 103, de manière à pouvoir supporter une charge verticale en Z. En outre, afin de diminuer la charge verticale en Z sur les autres points de fixation, notamment 101.2 et 101.3, le quatrième point de fixation 101.4 est avantageusement situé entre les points de fixation 101.2 et 101.3. Le quatrième point de fixation 101.4 est donc à une position intermédiaire selon Y par rapport aux points de fixation 101.2 et 101.3.

Le point de fixation additionnel 103.4 peut correspondre à une quatrième jambe de fixation du module d'éclairage, comme il sera mieux compris à la lecture de la description des figures suivantes.

Selon un mode de réalisation préférentiel, le point de fixation additionnel 103.4 est situé dans un voisinage 104 du centre de gravité du module d'éclairage 100. La zone définissant le voisinage 104 peut notamment être une zone centrée autour du point de gravité et d'une dimension inférieure à une fraction d'une dimension du module d'éclairage 100, telle que la largeur selon l'axe Y. Une telle fraction peut notamment correspondre à la moitié ou à un tiers de la largeur du module d'éclairage 100 selon l'axe Y, ou à une fraction 1/N avec N supérieur à 6.

Un tel positionnement du point de fixation additionnel 101.4 dans le voisinage 104 du centre de gravité est avantageux pour amortir les vibrations selon l'axe Z dont les contraintes mécaniques qui en découlent sont proportionnelles au poids du module d'éclairage 100.

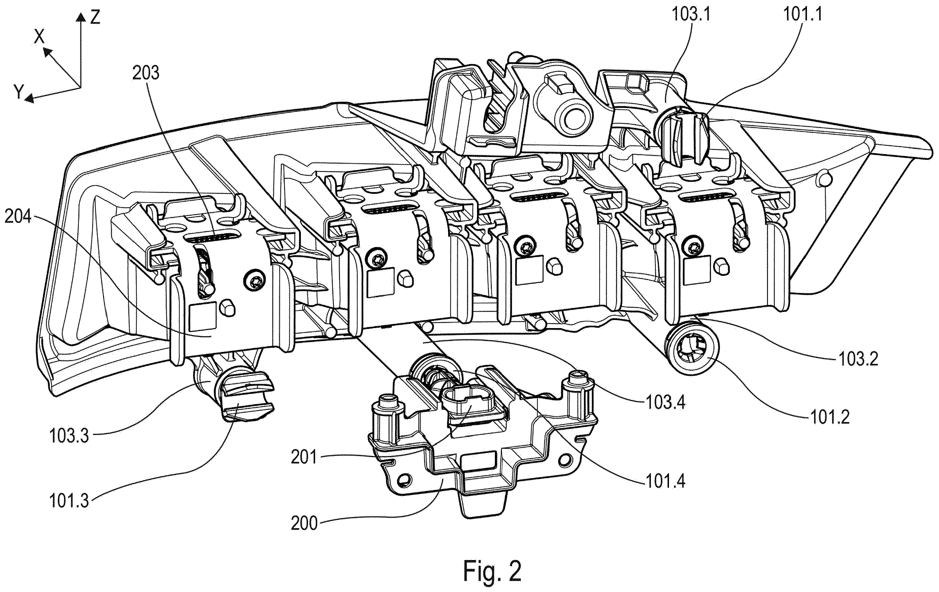

La figure 2 présente une vue tridimensionnelle d'un module d'éclairage selon un premier mode de réalisation de l'invention.

La vue de la figure 2 présente notamment les points de fixation 101.2 et 101.3 et le point de fixation additionnel 101.4.

En outre, la figure 2 présente quatre sources lumineuses avec leurs supports respectifs. L'une des sources lumineuses est référencée 203 et le support respectivement associé est référencé 204.

Les points de fixation 101.2 et 101.3 comprennent des jambes de fixation 103.2 et 103.3, qui s'étendent selon l'axe longitudinal X, dans un sens opposé au sens de projection du module d'éclairage 100. Les points de fixation 101.2 et 101.3 peuvent comprendre des liaisons à rotule assurées par des capsules de fixation, bien connues de la personne du métier. Le point de fixation 101.1, non représenté sur la figure 2, peut également comprendre une jambe de fixation ainsi qu'une capsule de fixation.

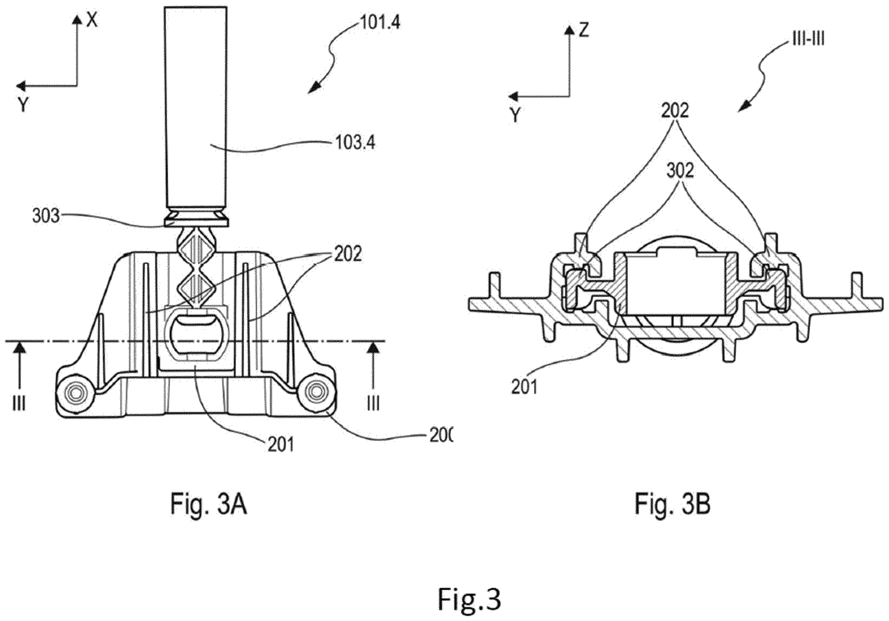

De manière similaire, le point de fixation additionnel peut comprendre une jambe de fixation 103.4 et une capsule de fixation additionnelle. Selon le premier mode de réalisation, la jambe de fixation est reliée à un chariot 201 monté dans des rainures de guidage 202 d'un élément de fixation 200 solidaire du boîtier, dont l'agencement sera mieux compris au vu de la figure 3.

Les figures 3A et 3B illustrent un chariot 201 réalisant un point de fixation additionnel selon un premier mode de réalisation. La figure 3B est une vue de coupe selon le plan III-III représenté sur la figure 3A.

Le chariot 201 peut comprendre une capsule de fixation additionnelle 303 et des éléments de guidage 302 complémentaires des rainures de guidage 202 de l'élément de fixation 200 du boîtier.

Les éléments de guidage 302 permettent au chariot 201, et donc au module d'éclairage 100, de coulisser selon l'axe longitudinal X, tout en soutenant le module d'éclairage selon la direction verticale Z. Le point de fixation additionnel 101.4 selon le premier mode de réalisation constitue ainsi une solution anti-vibration dans la mesure où il assure un soutien du module d'éclairage 100 selon la direction X correspondant à la direction de translation du chariot 201, ainsi qu'il limite des mouvements oscillatoires du module d'éclairage dans un plan perpendiculaire à la direction de translation du chariot 201, et en particulier les mouvements selon l'axe vertical Z. Le chariot est en effet guidé radialement de manière à rester centré sur sa direction de translation et à pouvoir reprendre des efforts radiaux.

De manière complémentaire, le chariot 201 et les rainures de guidage 202 de l'élément de fixation 200 peuvent être conformés de manière à ce que le module d'éclairage 100 soit libre en translation selon l'axe longitudinal X, mais également selon l'axe longitudinal Y. En variante ou en complément, le module d'éclairage 100 peut être libre en rotation autour d'un axe vertical Z.

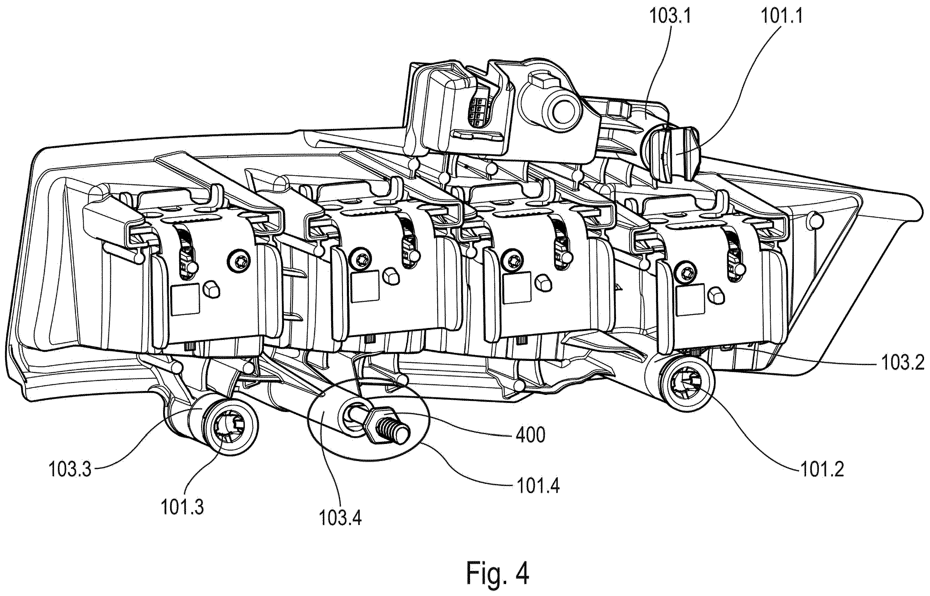

La figure 4 illustre une vue tridimensionnelle d'un module d'éclairage 100 selon un deuxième mode de réalisation de l'invention.

La vue de la figure 4 présente notamment les points de fixation 101.2 et 101.3 et le point de fixation additionnel 101.4.

Les quatre sources lumineuses et leurs supports respectifs ne sont pas référencés mais peuvent être identiques à celles de la figure 2 précédemment décrite.

Comme pour le premier mode de réalisation, les points de fixation 101.2 et 101.3 comprennent des jambes de fixation 103.2 et 103.3, qui s'étendent selon l'axe longitudinal X, dans un sens opposé au sens de projection du module d'éclairage 100. Les points de fixation 101.2 et 101.3 peuvent comprendre des liaisons à rotule assurées par des capsules de fixation, bien connues de la personne du métier. Le point de fixation 101.1 peut également comprendre une jambe de fixation ainsi qu'une capsule de fixation.

De manière similaire, le point de fixation additionnel 101.4 peut comprendre une jambe de fixation additionnelle 103.4. Selon le deuxième mode de réalisation, la jambe de fixation additionnelle 103.4 est corps creux tubulaire et est apte à recevoir une tige 400 solidaire du boîtier, la tige réalisant un contact sphère-plan sur une surface intérieure de la jambe de fixation 103.4.

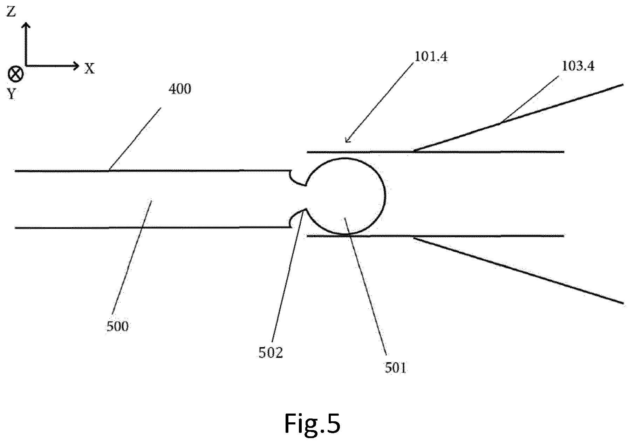

La figure 5 présente une tige 400 et une jambe de fixation 103.4 réalisant un point de fixation 101.4 selon le deuxième mode de réalisation de l'invention.

La tige 400 peut comprendre une partie tubulaire 500 s'étendant selon l'axe longitudinal X. A son extrémité dirigée vers la jambe de fixation 103.4, la tige 400 peut comprendre un rétrécissement de sa section transverse, dans un plan Y-Z, puis une sphère 501 en position extrême. La sphère 501 a une dimension légèrement inférieure à celle de l'intérieur de la jambe de fixation 103.4, de manière à faciliter le montage. La sphère est ainsi apte à réaliser un contact sphère-plan avec une surface intérieure de la jambe de fixation 103.4.

A noter que la jambe de fixation 103.4 peut avoir une section transverse carré, rectangulaire ou tubulaire. Il en va de même de la section transverse de la tige 400 qui peut être carrée, rectangulaire ou tubulaire comme représenté sur le figures 4, 5 et 6.

Le contact sphère-plan peut permettre à la tige 400 de coulisser dans la jambe de fixation 103.4, selon une direction longitudinale X, et peut en outre transmettre les efforts selon l'axe vertical Z, de manière limiter les mouvements oscillatoires du module d'éclairage 100.

Un tel contact sphère-plan permet en outre des rotations selon les trois axes X, Y et Z.

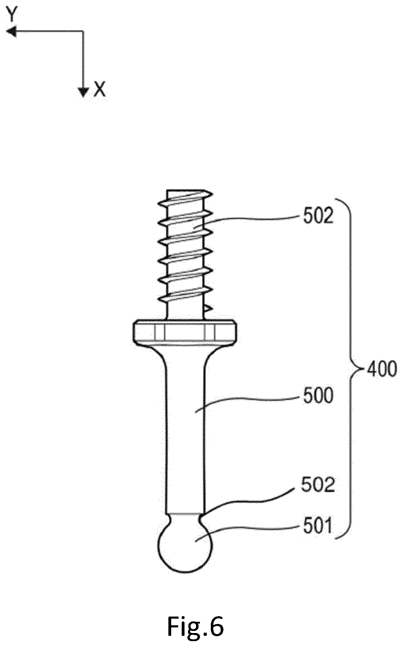

La figure 6 présente un exemple de tige 400 du point de fixation additionnel selon le deuxième mode de réalisation.

En plus de l'extrémité sphérique 501 et de sa partie tubulaire 500, la tige 400 peut comprendre un élément de fixation 502 de la tige 400 au boîtier. L'élément de fixation 502 permet de maintenir solidaire la tige 400 et le boîtier. La tige 400 transmet ainsi les efforts au boîtier via l'élément de fixation 502. Conformément à l'exemple de la figure 6, l'élément de fixation peut être un pas de vis, complémentaire d'un filetage du boîtier, non représenté sur la figure 6.

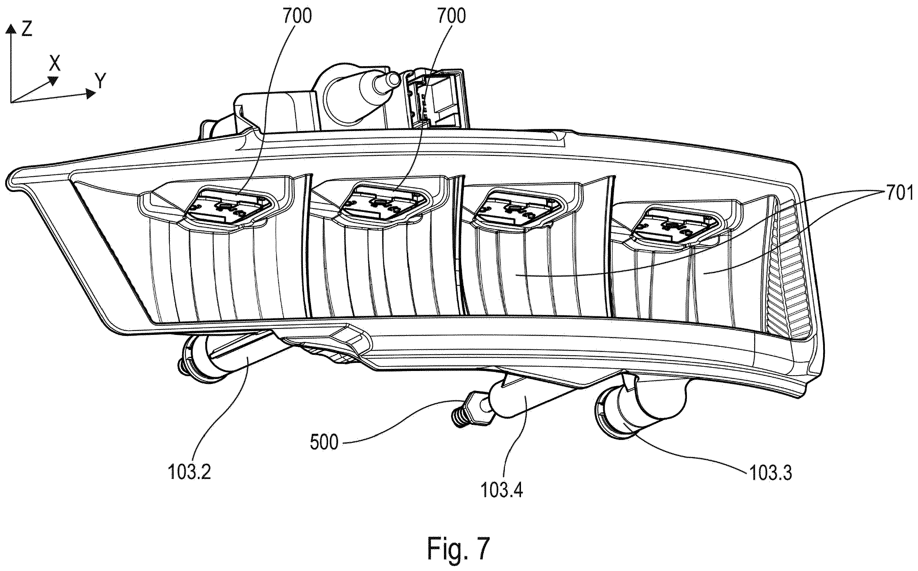

La figure 7 est une vue tridimensionnelle d'une face avant d'un module d'éclairage selon le deuxième mode de réalisation de l'invention. A noter que la face avant illustré sur la figure 7 peut être identique pour le premier mode de réalisation de l'invention.

Comme illustré sur la figure 7, le cadre du module d'éclairage 100 peut comprendre un ou plusieurs emplacements 700 pour intégrer une ou plusieurs sources lumineuses, situés dans des cavités 701 du réflecteur. Sur la figure 7, quatre cavités sont prévues dans le réflecteur pour accueillir quatre sources lumineuses. Aucune restriction n'est attachée au nombre de cavités et de sources lumineuses selon l'invention.

Dans les deux modes de réalisation présentés précédemment, le cadre du module d'éclairage 100 comprenant les jambes de fixation 103.1, 103.2, 103.3 et 103.4 peut être en un matériau plastique, tel qu'un matériau thermodurcissable ou thermoplastique. Dans ce cas, les jambes de fixation 103.1, 103.2, 103.3 et 103.4 peuvent être réalisées par injection, ce qui facilite leur fabrication et évite de devoir monter des pièces additionnelles sur le cadre du module d'éclairage 100.

La présente invention ne se limite pas aux formes de réalisation décrites ciavant à titre d'exemples ; elle s'étend à d'autres variantes définies selon les présentes revendications.

## Revendications

1. Dispositif d'éclairage pour un véhicule automobile, comprenant au moins un module d'éclairage (100) et un boîtier, ledit module d'éclairage étant monté mobile dans ledit boîtier au moyen d'un premier point de fixation (101.1), d'un deuxième point de fixation (101.2) et d'un troisième point de fixation (101.3), lesdits points de fixation étant agencés pour régler une orientation du module d'éclairage dans le boîtier et définissant deux axes de rotation (102; 103) du module d'éclairage dans le boîtier, dont un axe de rotation horizontal (103) défini par les deuxième (101.2) et troisième (101.3) points de fixation lorsque le dispositif d'éclairage est monté dans un véhicule automobile, le dispositif d'éclairage comprenant en outre un point de fixation additionnel (101.4) du module d'éclairage sur le boîtier, ledit point de fixation additionnel étant agencé entre les deuxième (101.2) et troisième (101.3) points de fixation **caractérisé en ce que** le point de fixation additionnel (101.4) est agencé sur 1' axe de rotation horizontal (103).

2. Dispositif d'éclairage selon la revendication 1, dans lequel le point de fixation additionnel (101.4) est apte à supporter une charge verticale du module d'éclairage.

3. Dispositif selon l'une des revendications précédentes, dans lequel le point de fixation additionnel (101.4) est dans un voisinage (104) du centre de gravité du module d'éclairage.

4. Dispositif selon l'une des revendications précédentes, dans lequel les premier, deuxième et troisième points de fixation (101.1 ; 101.2 ; 101.3) sont disposés de manière à encadrer le voisinage du centre de gravité (101.4) du module d'éclairage.

5. Dispositif selon l'une des revendications précédentes, dans lequel, lorsque le dispositif est monté dans un véhicule automobile, le module d'éclairage est orienté de manière à émettre des rayons lumineux sensiblement parallèles à un axe horizontal et longitudinal X et le module d'éclairage s'étend en largeur selon un axe horizontal et transversal Y ;
dans lequel le premier point de fixation (101.1) est mobile en translation selon un axe vertical Z perpendiculaire au plan horizontal Y-X et est disposé proche de la limite haute du module d'éclairage dans le plan Y-Z.
dans lequel le deuxième point de fixation (101.2) est un point de liaison fixe à rotule ; les premier et deuxième points de fixation (101.1, 101.2) étant alignés selon l'axe vertical Z ; et
dans lequel le troisième point de fixation (101.3) est mobile en translation selon l'axe Y ;
les deuxième et troisième points de fixation étant alignés selon l'axe Y et disposés proche de la limite basse du module d'éclairage.

6. Dispositif selon l'une des revendications précédentes, dans lequel, lorsque le dispositif d'éclairage est monté dans un véhicule automobile, le module d'éclairage est orienté de manière à émettre des rayons lumineux sensiblement parallèles à un axe horizontal et longitudinal X et le module d'éclairage s'étend en largeur selon un axe horizontal et transversal Y ;
dans lequel le module d'éclairage comprend une jambe de fixation additionnelle (103.4), s'étendant sensiblement selon l'axe X, dans un sens opposé au sens de propagation des rayons lumineux, et le dispositif d'éclairage comprend une tige (400) solidaire du boîtier et apte à réaliser un contact sphère-plan avec une surface intérieure de la jambe de fixation, le contact sphère-plan étant apte à supporter une charge verticale du module d'éclairage et formant le point de fixation additionnel.

7. Dispositif selon la revendication 6, dans lequel la tige (400) comprend une partie tubulaire (500) s'étendant selon l'axe longitudinal X et à son extrémité dirigée vers la jambe de fixation (103.4), la tige comprend un rétrécissement de sa section transverse de sorte à former une gorge (502), suivi d'une sphère (501) en position extrême.

8. Dispositif d'éclairage selon l'une des revendications 6 à 7, dans lequel la jambe de fixation additionnelle (103.4) est réalisée en un matériau thermodurcissable ou thermoplastique.

9. Dispositif d'éclairage selon l'une des revendications 6 à 8, comprenant un support du module d'éclairage, dans lequel ledit support est principalement en un matériau thermodurcissable ou thermoplastique, dans lequel la jambe de fixation additionnelle (103.4) est obtenue par injection dudit support.

10. Dispositif d'éclairage selon l'une des revendications 1 à 5, dans lequel, lorsque le dispositif d'éclairage est monté dans un véhicule automobile, le module d'éclairage est orienté de manière à émettre des rayons lumineux sensiblement parallèles à un axe horizontal et longitudinal X et le module lumineux s'étend en largeur selon un axe horizontal et transversal Y ;
dans lequel le module d'éclairage comprend une jambe de fixation additionnelle (103.4), s'étendant sensiblement selon l'axe X, dans un sens opposé au sens de propagation des rayons lumineux, et dans lequel la jambe de fixation additionnelle comprend un chariot (201) monté dans des rainures de guidage du boîtier par une liaison glissière selon l'axe horizontal et longitudinal X, la liaison glissière étant apte à supporter une charge verticale du module d'éclairage, le contact entre le chariot (201) et les rainures de guidage formant le point de fixation additionnel.

11. Dispositif d'éclairage selon la revendication précédente, dans lequel le chariot (201) et les rainures de guidage sont conformés et agencés de manière à ce que la liaison glissière soit libre en translation selon l'axe X et selon l'axe transversal Y, et libre en rotation autour d'un axe vertical Z.

## Patentansprüche

1. Beleuchtungsvorrichtung für ein Kraftfahrzeug, die mindestens ein Beleuchtungsmodul (100) und ein Gehäuse beinhaltet, wobei das Beleuchtungsmodul mit Hilfe eines ersten Befestigungspunkts (101.1), eines zweiten Befestigungspunkts (101.2) und eines dritten Befestigungspunkts (101.3) bewegbar in dem Gehäuse montiert ist, wobei die Befestigungspunkte dazu eingerichtet sind, eine Orientierung des Moduls in dem Gehäuse zu regeln, und zwei Rotationsachsen (102; 103) des Beleuchtungsmoduls in dem Gehäuse definieren, eine davon eine horizontale Rotationsachse (103), die durch den zweiten (101.2) und den dritten (101.3) Befestigungspunkt definiert wird, wenn die Beleuchtungsvorrichtung in einem Kraftfahrzeug montiert ist, wobei die Beleuchtungsvorrichtung ferner einen zusätzlichen Befestigungspunkt (101.4) des Beleuchtungsmoduls in dem Gehäuse beinhaltet, wobei der zusätzliche Befestigungspunkt zwischen dem zweiten (101.2) und dem dritten (101.3) Befestigungspunkt eingerichtet ist, **dadurch gekennzeichnet, dass** der zusätzliche Befestigungspunkt (101.4) auf der horizontalen Rotationsachse (103) eingerichtet ist.

2. Beleuchtungsvorrichtung nach Anspruch 1, wobei der zusätzliche Befestigungspunkt (101.4) dazu fähig ist, eine vertikale Last de Beleuchtungsmoduls zu tragen.

3. Vorrichtung nach einem der vorhergehenden Ansprüche, wobei sich der zusätzliche Befestigungspunkt (101.4)in einer Umgebung (104) des Schwerpunkts des Beleuchtungsmoduls befindet.

4. Vorrichtung nach einem der vorhergehenden Ansprüche, wobei der erste, der zweite und der dritte Befestigungspunkt (101.1 ; 101.2 ; 101.3) so angeordnet sind, dass sie die Umgebung des Schwerpunkts (101.4) des Beleuchtungsmoduls einrahmen.

5. Vorrichtung nach einem der vorhergehenden Ansprüche, wobei, wenn die Vorrichtung in einem Kraftfahrzeug montiert ist, das Beleuchtungsmodul so orientiert ist, dass es Lichtstrahlen im Wesentlichen parallel zu einer horizontalen Längsachse X emittiert, und sich das Beleuchtungsmodul in der Breite gemäß einer horizontalen Querachse Y erstreckt;
wobei der erste Befestigungspunkt (101.1) ggemäß einer vertikalen Z-Achse, die zu der horizontalen Y-X-Ebene senkrecht ist, translatorisch bewegbar ist und nahe der oberen Grenze des Beleuchtungsmoduls in der Y-Z-Ebene angeordnet ist;
wobei der zweite Befestigungspunkt (101.2) ein fester Kugelgelenkverbindungspunkt ist; wobei der erste und der zweite Befestigungspunkt (101.1, 101.2) gemäß der vertikalen Z-Achse ausgerichtet sind; und
wobei der dritte Befestigungspunkt (101.3) gemäß der Y-Achse translatorisch bewegbar ist; wobei der zweite und der dritte Befestigungspunkt gemäß der Y-Achse ausgerichtet sind und nahe der unteren Grenze des Beleuchtungsmoduls angeordnet sind.

6. Vorrichtung nach einem der vorhergehenden Ansprüche, wobei, wenn die Beleuchtungsvorrichtung in einem Kraftfahrzeug montiert ist, das Beleuchtungsmodul so orientiert ist, dass es Lichtstrahlen im Wesentlichen parallel zu einer horizontalen Längsachse X emittiert, und sich das Beleuchtungsmodul in der Breite gemäß einer horizontalen Querachse Y erstreckt;
wobei das Beleuchtungsmodul ein zusätzliches Befestigungsbein (103.4) beinhaltet, das sich in einer zu der Ausbreitungsrichtung der Lichtstrahlen entgegengesetzten Richtung im Wesentlichen gemäß der X-Achse erstreckt, und wobei die Beleuchtungsvorrichtung eine Stange (400) beinhaltet, die fest mit dem Gehäuse verbunden ist und dazu fähig ist, einen Kugel-Ebene-Kontakt mit einer Innenoberfläche des Befestigungsbeins herzustellen, wobei der Kugel-Ebene-Kontakt dazu fähig ist, eine vertikale Last des Beleuchtungsmoduls zu tragen, und den zusätzlichen Befestigungspunkt bildet.

7. Vorrichtung nach Anspruch 6, wobei die Stange (400) einen rohrförmigen Abschnitt (500) beinhaltet, der sich gemäß der X-Längsachse erstreckt und wobei die Stange an ihrem Ende, das zu dem Befestigungsbein (103.4) gerichtet ist, eine Verengung ihres Querschnitts beinhaltet, sodass eine Nut (502) gebildet wird, gefolgt von einer Kugel (501) in der Endposition.

8. Beleuchtungsvorrichtung nach einem der Ansprüche 6 bis 7, wobei das zusätzliche Befestigungsbein (103.4) aus einem duroplastischen oder thermoplastischen Material hergestellt ist.

9. Beleuchtungsvorrichtung nach einem der Ansprüche 6 bis 8, die einen Träger des Beleuchtungsmoduls beinhaltet, wobei der Träger im Wesentlichen aus einem duroplastischen oder thermoplastischen Material besteht, wobei das zusätzliche Befestigungsbein (103.4) durch Spritzgießen des Trägers erhalten wird.

10. Beleuchtungsvorrichtung nach einem der Ansprüche 1 bis 5, wobei, wenn die Beleuchtungsvorrichtung in einem Kraftfahrzeug montiert ist, das Beleuchtungsmodul so orientiert ist, dass es Lichtstrahlen im Wesentlichen parallel zu einer horizontalen Längsachse X emittiert, und sich das Lichtmodul in der Breite gemäß einer horizontalen Querachse Y erstreckt;
wobei das Beleuchtungsmodul ein zusätzliches Befestigungsbein (103.4) beinhaltet, das sich in einer zu der Ausbreitungsrichtung der Lichtstrahlen entgegengesetzten Richtung im Wesentlichen gemäß der X-Achse erstreckt, und wobei das zusätzliche Befestigungsbein einen Schlitten (201) beinhaltet, der durch eine Gleitschienenverbindung in Führungsrillen des Gehäuses gemäß der horizontalen Längsachse X montiert ist, wobei die Gleitschienenverbindung dazu fähig ist, eine vertikale Laste des Beleuchtungsmoduls zu tragen, wobei der Kontakt zwischen dem Schlitten (201) und den Führungsrillen den zusätzlichen Befestigungspunkt bilden.

11. Beleuchtungsvorrichtung nach dem vorhergehenden Anspruch, wobei der Schlitten (201) und die Führungsrillen so angepasst und eingerichtet sind, dass die Gleitschienenverbindung in Translationsrichtung gemäß der Achse X und der Querachse Y frei ist und in Rotationsrichtung um eine vertikale Z-Achse frei ist.

## Claims

1. Luminous device for an automotive vehicle, comprising at least one luminous module (100) and a housing, said luminous module being movably mounted in said housing by means of a first fastening point (101.1), a second fastening point (101.2) and a third fastening point (101.3), said fastening points being arranged to control an orientation of the luminous module in the housing and defining two axes of rotation (102; 103) of the luminous module in the housing, including a horizontal axis of rotation (103) defined by the second (101.2) and third (101.3) fastening points when the luminous device is mounted in an automotive vehicle, the luminous device further comprising an additional fastening point (101.4) of the luminous module on the housing, said additional fastening point being arranged between the second (101.2) and third (101.3) fastening points, **characterized in that** the additional fastening point (101.4) is arranged on the horizontal axis of rotation (103).

2. Luminous device according to Claim 1, wherein the additional fastening point (101.4) is able to support a vertical load of the luminous module.

3. Device according to either of the preceding claims, wherein the additional fastening point (101.4) is in the vicinity (104) of the centre of gravity of the luminous module.

4. Device according to one of the preceding claims, wherein the first, second and third fastening points (101.1; 101.2; 101.3) are disposed in such a way as to flank the vicinity of the centre of gravity (101.4) of the luminous module.

5. Device according to one of the preceding claims, wherein, when the device is mounted in an automotive vehicle, the luminous module is oriented in such a way as to emit rays of light that are substantially parallel to a horizontal and longitudinal axis X and the luminous module extends widthwise along a horizontal and transverse axis Y;
wherein the first fastening point (101.1) is able to move in translation along a vertical axis Z perpendicular to the horizontal plane Y-X and is disposed close to the upper limit of the luminous module in the plane Y-Z; wherein the second fastening point (101.2) is a fixed ball-joint connection point; the
first and second fastening points (101.1, 101.2) being aligned along the vertical axis Z;
and
wherein the third fastening point (101.3) is able to move in translation along the axis Y;
the second and third fastening points being aligned along the axis Y and disposed close to the lower limit of the luminous module.

6. Device according to one of the preceding claims, wherein, when the luminous device is mounted in an automotive vehicle, the luminous module is oriented in such a way as to emit rays of light that are substantially parallel to a horizontal and longitudinal axis X and the luminous module extends widthwise along a horizontal and transverse axis Y;
wherein the luminous module comprises an additional fastening leg (103.4), extending substantially along the axis X, in a direction opposite to the direction of propagation of the rays of light, and the luminous device comprises a rod (400) that is secured to the housing and is able to produce a sphere-plane contact with an inner surface of the fastening leg, the sphere-plane contact being able to support a vertical load of the luminous module and forming the additional fastening point.

7. Device according to Claim 6, wherein the rod (400) comprises a tubular part (500) extending along the longitudinal axis X and, at its end directed towards the fastening leg (103.4), the rod comprises a narrowing of its cross section so as to form a groove (502), followed by a sphere (501) in the extreme position.

8. Luminous device according to either of Claims 6 and 7, wherein the additional fastening leg (103.4) is made of a thermosetting or thermoplastic material.

9. Luminous device according to one of Claims 6 to 8, comprising a support for the luminous module, wherein said support is mainly made of a thermosetting or thermoplastic material, wherein the additional fastening leg (103.4) is obtained by injection moulding of said support.

10. Luminous device according to one of Claims 1 to 5, wherein, when the luminous device is mounted in an automotive vehicle, the luminous module is oriented in such a way as to emit rays of light that are substantially parallel to a horizontal and longitudinal axis X and the luminous module extends widthwise along a horizontal and transverse axis Y;
wherein the luminous module comprises an additional fastening leg (103.4), extending substantially along the axis X, in a direction opposite to the direction of propagation of the rays of light, and wherein the additional fastening leg comprises a carriage (201) mounted in guide slots of the housing by a slide connection along the horizontal and longitudinal axis X, the slide connection being able to support a vertical load of the luminous module, the contact between the carriage (201) and the guide slots forming the additional fastening point.

11. Luminous device according to the preceding claim, wherein the carriage (201) and the guide slots are designed and arranged in such a way that the slide connection is free to effect a translational movement along the axis X and along the transverse axis Y, and free to effect a rotational movement about a vertical axis Z.
